# EUROPÄISCHE PATENTSCHRIFT

(11) **EP 2 583 649 B1**
(45) Veröffentlichungstag und Bekanntmachung des Hinweises auf die Patenterteilung: **13.08.2014**
(21) Anmeldenummer: 12171402.6
(22) Anmeldetag: 08.06.2012
(51) Int. Cl.: A61G 3/08, B60N 2/30

(54) **Lehnenanordnung für Rollstuhlfahrer zum Einbau in Kraftfahrzeugen**
Rest assembly for wheelchair users for installation in motor vehicles
Système de dossier pour personne en fauteuil roulant destiné à l'intégration dans des véhicules automobiles

(30) Priorität: 01.06.2011 DE 202011101394 U
(43) Veröffentlichungstag der Anmeldung: 24.04.2013
(73) Patentinhaber: AMF-Bruns GmbH & Co. KG, 26689 Apen (DE)
(72) Erfinder: Bruns, Gerit, 26160 Bad Zwischenahn (DE)
(74) Vertreter: Eisenführ Speiser

(56) Entgegenhaltungen:
- DE-A1-102005 048 143
- DE-C1- 19 930 048
- DE-U1-202005 016 461
- GB-A- 2 102 743

## Beschreibung

Die Erfindung betrifft eine Lehnenanordnung zum Einbau in ein Kraftfahrzeug zur Beförderung von Rollstuhlfahrernmit einer Befestigungseinrichtung zum Befestigen der Lehnenanordnung an der Decke des Kraftfahrzeugs und einer an der Befestigungseinrichtung angebrachten Rückenlehne zum Stützen eines Rollstuhlfahrers, wobei die Rückenlehne zwischen einer an der Befestigungseinrichtung verstauten Stauposition und einer im Wesentlichen ausgefahrenen Betriebsposition bewegbar ist, sowie ein Kraftfahrzeug mit einer solchen Lehnenanordnung.

Zur Beförderung von Rollstuhlfahrern in Kraftfahrzeugen ist es bekannt, das ein Rollstuhlfahrer hierfür samt seinem Rollstuhl in ein entsprechend großes Kraftfahrzeug beispielsweise mittels einer Rampe oder einer Hubvorrichtung geschoben und dort gegen Verrutschen gesichert wird. Ferner sind Lehnenanordnungen bekannt, die am Fahrzeug befestigt sind und bei Bedarf an den Rücken des Rollstuhlfahrers in Sitzposition ausgefahren werden. Insbesondere im Falle einer abrupten Bremsung oder eines Verkehrsunfalls des Kraftfahrzeugs bietet eine solche Lehnenanordnung eine Stütze für den Rücken- und Kopfbereich des Rollstuhlfahrers, damit dieser nicht nach hinten geschleudert wird.

Das Gebrauchsmuster DE 20 2005 016 461.5 der Anmelderin offenbart eine solche Lehnenanordnung, bei der die Lehne an einer Seitenwand eines Kraftfahrzeugs mittels Schwenkarmen angebaut ist. Diese Schwenkarme sind um eine vertikale Achse schwenkbar und ermöglichen es der Lehne, bei Bedarf an die Rückenposition des Rollstuhlfahrers auszuschwenken, sobald dieser die finale Sitzposition im Kraftfahrzeug eingenommen hat. Die Lehnenanordnung schränkt den Fahrzeuginnenraum etwas ein, insbesondere wenn keine Rollstuhlfahrer zu befördern sind. Ferner hat die Befestigung der Lehne an der Seitenwand hat den Nachteil, dass das Gewicht der Lehne über den Hebel der Schwenkarme an der Fahrzeugwand wirkt und dass die Befestigung an der Fahrzeugwand je nach Gewicht und Hebellänge entsprechend groß auslegt sein muss. Kurze Schwenkarme verkleinern zwar den Hebel, aber auch gleichzeitig die Einstellbarkeit der Position der Lehne quer zur Fahrtrichtung. Der Rollstuhlfahrer muss daher stets an der Fahrzeugwand sitzen. Besonders breite Rollstühle könnten über die Lehnenanordnung seitlich hinausragen und nur unzureichend abgestützt werden.

Ferner sind auch Lehnen bekannt, die bei Bedarf in den Fahrzeugboden hinter den jeweiligen Rollstuhl mit Rollstuhlfahrer eingesteckt und der Rollstuhl unmittelbar davor angeordnet und befestigt wird. Nachteilig ist hierbei die schwierige Handhabbarkeit solcher Lehnen. Zum Hineinfahren und Herausfahren eines Rollstuhls ist es erforderlich, dass eine solche steckbare Lehne aus ihrem Platz genommen und anderswo zwischengelagert wird. Darüber hinaus ist eine solche Rückenlehne vom eingesteckten Platz im Fahrzeugboden aus recht lang ausgestaltet, sodass entsprechend kräftige Stützen erforderlich sind, um auch am oben gelegenen Kopfteil entsprechend große Kräfte aufnehmen zu können.

Eine weitere Lehnenanordnung, welche sowohl an dem Fahrzeugboden als auch an der Fahrzeugdecke mittels einer Steckverbindung zu befestigen ist, ist aus GB 2 102 743 A bekannt.

Bekannte Lehnenanordnungen sind außerdem in DE 10 2005 048 143 A1 und DE 199 30 048 C1 beschrieben.

Aufgabe der Erfindung ist es daher, eine Lehnenanordnung aufzuzeigen, welche diese Nachteile nicht aufweist.

Die Aufgabe wird gelöst mittels einer Lehnenanordnung der eingangs genannten Art, wobei die Befestigungseinrichtung mindestens eine Schiene aufweist und wobei die Rückenlehne entlang der Schiene verschiebbar ist.

Die Lehnenanordnung ist so ausgelegt, dass sie mittels der Befestigungseinrichtung an der Decke eines Kraftfahrzeugs befestigbar ist und sich in der Stauposition vollständig im Bereich der Decke des Kraftfahrzeugs befindet. Auf diese Weise nimmt die Lehnenanordnung keinen Raum im Bereich der Sitzposition der Rollstuhlfahrer bzw. Passagiere ein. Der Sitzbereich kann auf diese Weise bei Bedarf auch mit Sitzen für Passagiere ohne Behinderung bestückt werden. Zudem ist die Lehnenanordnung variabel innerhalb eines Kraftfahrzeugs befestigbar, so dass der Rollstuhlfahrer seine Sitzposition innerhalb des Kraftfahrzeugs frei bestimmen kann und nicht zwangsweise im Bereich der Fahrzeugwand sitzen muss. In der ausgefahrenen Betriebsposition befindet sich die Rückenlehne an der Rückenposition des Rollstuhlfahrers. Die Rückenlehne stützt den Rücken und Kopf des Rollstuhlfahrers ab. Ferner ist die Rückenlehne so anordnenbar, dass der Rollstuhlfahrer in oder entgegen der Fahrtrichtung sitzen kann. Das Bewegen der Rückenlehne aus der Stauposition in die Betriebsposition umfasst vorteilhafterweise u. a. schwenkbar, ausfahrbar, ausfaltbar oder ausrollbar. Je nach Ausführung der Rückenlehne könnten aber auch faltbare, zusammenrollbare oder ineinander steckbare Rückenlehnen vorteilhaft sein.

Die Befestigungseinrichtung weist eine hohe Stabilität und Tragfähigkeit auf, um eine sichere Befestigung der Lehnenanordnung an der Decke eines Kraftfahrzeugs zu erreichen. Sie ist ausgelegt, um die Gewichtskraft der Rückenlehne und die im Betrieb auftretenden Kräfte bzw. Momente sicher aufzunehmen. Vorzugsweise ist die Befestigungseinrichtung an Tragstrukturelementen eines Kraftfahrzeugs befestigbar.

Die erfindungsgemäße Lehnenanordnung wird vorteilhafterweise dadurch weitergebildet, dass die Rückenlehne drehbar um eine horizontale Schwenkachse an der Befestigungseinrichtung gelagert ist. Die Drehbarkeit oder Schwenkbarkeit der Rückenlehne um eine horizontale Schwenkachse ermöglicht eine besonders ergonomische Bedienbarkeit der Rückenlehne.

Eine weitere vorteilhafte Ausführungsform der erfindungsgemäßen Lehnenanordnung weist eine Rückenlehne auf, die in der Stauposition im Wesentlichen horizontal ausgerichtet ist. Mittels dieser Ausführungsform ist die Rückenlehne in der Stauposition besonders platzsparend untergebracht, insbesondere unter der Decke des Fahrzeugs. Vorzugsweise ist die Rückenlehne in der Stauposition parallel zur Befestigungseinrichtung ausgerichtet.

Eine weitere bevorzugte Ausführungsform der erfindungsgemäßen Lehnenanordnung umfasst eine Rückenlehne, die in horizontaler Bewegungsrichtung verstellbar ist. In der Betriebsposition ist die Rückenlehne auf diese Weise besonders einfach und variabel an die Sitzposition des Rollstuhlfahrers anpassbar. In der Stauposition bietet die horizontale Verstellbarkeit der Rückenlehne zudem den Vorteil, die Stauposition der Rückenlehne je nach Platzbedarf an der Decke des Kraftfahrzeugs in horizontaler Richtung oder in einer horizontalen Ebene zu variieren.

Erfindungsgemäß weist die Befestigungseinrichtung mindestens eine Schiene auf, wobei die Rückenlehne entlang der Schiene verschiebbar ist. Auf diese Weise ist die horizontale Verstellbarkeit der Rückenlehne stabil und ergonomisch realisierbar.

Besonders vorteilhaft ist eine Ausführungsform der erfindungsgemäßen Lehnenanordnung, dessen Befestigungseinrichtung zwei zueinander beabstandete und parallel angeordnete Schienen aufweist. Mittels dieser Ausführungsform ist die horizontale Verstellbarkeit der Rückenlehne besonders stabil und ergonomisch realisierbar.

Vorteilhaft ist dabei eine weitere Ausführungsform der erfindungsgemäßen Lehnenanordnung mit einem Schlitten, der zum Verschieben der Rückenlehnen in die Schienen eingehängt ist. Der Schlitten ermöglicht eine stabile Befestigung der Rückenlehne an der Befestigungseinrichtung und zugleich eine stabile und einfache Möglichkeit zum horizontalen Verstellen der Rückenlehne. Vorzugsweisee ist die Teleskopstange drehbar an dem Schlitten befestigt. Die Teleskopstange ist um eine horizontal verlaufende Achse und / oder um die eigene Längsachse eine drehbar und erreicht auf diese Weise eine variable Anpassbarkeit der Rückenlehne in der Betriebs- und Stauposition.

Die erfindungsgemäße Lehnenanordnung wird mittels einer weiteren vorteilhaften Ausführungsform weitergebildet, bei der die Rückenlehne an einer Teleskopstange angebracht ist und die Teleskopstange mit der Befestigungseinrichtung verbunden ist. Die Teleskopstange ermöglicht die Höhe der Rückenlehne variabel an die Rückenposition des Rollstuhlfahrers anzupassen. Ferner erlaubt die Teleskopstange eine zusätzliche Möglichkeit zum platzsparenden Verstauen der Rückenlehne in der Stauposition.

Eine weitere vorteilhafte Ausführungsform der erfindungsgemäßen Lehnenanordnung umfasst einen Schlitten, der mindestens einen Drehriegel aufweist, der mit einer Schiene zusammenwirkt, um den Schlitten an der Schiene in verschiedenen Positionen zu arretieren. Auf diese Weise ist der Schlitten schnell und sicher an der Befestigungseinrichtung manuell arretierbar.

Ferner ist eine Ausführungsform der erfindungsgemäßen Lehnenanordnung vorteilhaft, die ein am Schlitten angebrachtes Sicherungsglied aufweist, das mindestens in der Stauposition und in der Betriebsposition der Rückenlehne in eine Ausnehmung an der Teleskopstange in Eingriff bringbar ist und auf diese Weise eine sichere Arretierung der Rückenlehne in den besagten Positionen erreicht. Vorzugsweise kommt das Sicherungsglied automatisch mit einer Ausnehmung an der Teleskopstange in Eingriff, sobald sich die Teleskopstange in der Stau- bzw. Betriebsposition befindet. Die automatische Sicherung der Teleskopstange und damit der Rückenlehne erhöht die Sicherheit in der Benutzung der Lehnenanordnung. Ferner ist das Sicherungsglied manuell wieder außer Eingriff bringbar, um die Arretierung der Teleskopstange zu lösen.

Weiterhin ist die erfindungsgemäße Lehnenanordnung dadurch vorteilhaft weitergebildet, dass die Rückenlehne mittels eines Rotationsdämpfers oder einer Gasfeder gedämpft drehbar ist. Die gedämpfte Drehbarkeit der Rückenlehne verhindert ein abruptes Abfallen der Rückenlehne und wirkt unterstützend bei der Bewegung aus der Stauposition in die Betriebsposition.

Ferner ist eine Ausführungsform der erfindungsgemäßen Lehnenanordnung vorteilhaft, die einen Sicherheitsgurt aufweist, der zumindest teilweise an der Rückenlehne befestigbar ist. Der Sicherheitsgurt bietet zusätzlichen Halt beim abrupten Bremsen oder Verkehrsunfällen und erhöht somit die Sicherheit des Rollstuhlfahrers. Vorzugsweise ist der Sicherheitsgurt als 3-Punkt-Sicherheitsgurt ausgebildet.

Ferner weist eine vorteilhafte Ausführungsform der erfindungsgemäßen Lehnenanordnung eine Kopfstütze auf, die an der Teleskopstange verschiebbar befestigt ist. Die Lehnenanordnung ist auf diese Weise besonders variabel an die anatomischen Eigenschaften des Rollstuhlfahrers anpassbar.

Ein zweiter Aspekt der Erfindung betrifft ein Kraftfahrzeug zur Beförderung von Rollstuhlfahrern mit mindestens einer Lehnenanordnung mit einer Befestigungseinrichtung zum Befestigen der Lehnenanordnung an der Decke des Kraftfahrzeugs, und einer an der Befestigungseinrichtung angebrachten Rückenlehne zum Stützen eines Rollstuhlfahrers, wobei die Rückenlehne zwischen einer an der Befestigungseinrichtung verstauten Stauposition und einer im Wesentlichen ausgefahrenen Betriebsposition bewegbar ist, und wobei die Lehnenanordnung mittels der Befestigungseinrichtung an der Decke des Kraftfahrzeugs befestigt ist, wobei die Befestigungseinrichtung mindestens eine Schiene aufweist und wobei die Rückenlehne entlang der Schiene verschiebbar ist.

Das Kraftfahrzeug ist besonders variabel sowohl für Rollstuhlfahrer als auch für Passagiere ohne Behinderung nutzbar. Vorzugsweise ist die Lehnenanordnung zumindest teilweise unterhalb der Deckenverkleidung des Kraftfahrzeugs eingebaut, so dass die

Ästhetik des Innenraums zu einer Version eines Kraftfahrzeugs aus der Werksproduktion annähernd identisch ist. Die Abmessungen der Einzelteile der Lehnenanordnung sind individuell an Platzverhältnisse im Innenraum des Kraftfahrzeugs angepasst auslegbar.

Eine vorteilhafte Ausführungsform des erfindungsgemäßen Kraftfahrzeugs weist mindestens eine Lehnenanordnung nach einem der Ansprüche 2 bis 11 bzw. nach einem der oben beschriebenen Ausführungsformen auf.

Ferner ist eine Ausführungsform des erfindungsgemäßen Kraftfahrzeugs vorteilhaft, die dadurch gekennzeichnet ist, dass die Rückenlehne drehbar um eine horizontale Schwenkachse an der Befestigungseinrichtung gelagert ist, wobei die horizontale Schwenkachse quer oder parallel zur Fahrtrichtung ausgerichtet ist. In Kombination mit sehr langen Kraftfahrzeugen ist die Rückenlehne, die quer zur Fahrtrichtung schwenkbar ist, besonders komfortabel einbau- und bedienbar. Bei kürzeren Kraftfahrzeugen ist die Variante einer parallel zur Fahrtrichtung ausgerichteten Schwenkachse hinsichtlich der Bedienbarkeit und des Einbaus komfortabel. Die Anordnung der Rückenlehne ist an die Ausrichtung der Schwenkachse anpassbar.

Bevorzugt ist weiterhin eine Ausführungsform des erfindungsgemäßen Kraftfahrzeugs, bei dem die Schienen parallel und / oder quer zur Fahrtrichtung angeordnet sind. Die Rückenlehne ist auf diese Weise variabel an die Sitzposition des Rollstuhlfahrers in horizontaler Richtung verstellbar.

Weiterhin ist eine Ausführungsform des erfindungsgemäßen Kraftfahrzeugs bevorzugt, dessen Rückenlehne in der Stauposition im Wesentlichen an der Decke des Kraftfahrzeugs anliegt. Dies erlaubt eine besonders platzsparende Verstaubarkeit der Rückenlehne in der Stauposition.

Vorteilhaft ist auch eine Ausführungsform des erfindungsgemäßen Kraftfahrzeugs, bei dem die Rückenlehne in Fahrtrichtung aus der Stauposition in die Betriebsposition schwenkbar ist. Auf diese Weise ist die Rückenlehne besonders komfortabel aus der Stauposition in die Betriebsposition an den Rücken eines Rollstuhlfahrers schwenkbar. Die Rückenlehne ist von hinten an dem Rücken eines in Fahrtrichtung sitzenden Rollstuhlfahrers positionierbar, nachdem dieser seine Sitzposition eingenommen hat. Bevor der Rollstuhlfahrer seine Sitzposition eingenommen hat, befindet sich die Rückenlehne in der Stauposition, so dass die Rückenlehne dem Rollstuhlfahrer nicht im Wege steht, wenn er in das Kraftfahrzeug einfährt. Die Fahrtrichtung entspricht hierbei der Bewegungsrichtung des Fahrzeugs nach vorne.

Desweiteren ist eine Ausführungsform vorteilhaft, bei der die Rückenlehne in der Stauposition an der Decke des Fahrzeugs und/oder in der Betriebsposition am Boden des Fahrzeugs befestigbar ist und auf diese Weise eine in der Stau- bzw. Betriebsposition sicher arretierbar ist.

Die Erfindung wird im Folgenden mittels Ausführungsbeispielen und Zeichnungen detailliert beschrieben. Es zeigen:
- Figur 1: eine perspektivische Ansicht eines Ausführungsbeispiels einer erfindungsgemäßen Lehnenanordnung in der Betriebsposition,
- Figur 2: eine Seitenansicht des Ausführungsbeispiels in der Betriebsposition mit einer schematischen Darstellung eines Ausschnitts eines Kraftfahrzeugs;
- Figur 3: einen vergrößerten Abschnitt der Befestigungseinrichtung des Ausführungsbeispiels in perspektivischer Ansicht;
- Figur 4: eine Ansicht von unten auf das Ausführungsbeispiel in der Betriebsposition,
- Figur 5: eine perspektivische Ansicht des Ausführungsbeispiels in Stauposition,
- Figur 6: eine vergrößerte Darstellung des Schlittens des Ausführungsbeispiels in perspektivischer Ansicht,
- Figur 7: eine perspektivische Darstellung auf ein Ausführungsbeispiel eines Kraftfahrzeugs mit der Lehnenanordnung nach dem vorgenannten Ausführungsbeispiel in der Stauposition, und
- Figur 8: eine perspektivische Darstellung auf das Ausführungsbeispiel des Kraftfahrzeugs mit der Lehnenanordnung in der Betriebsposition.

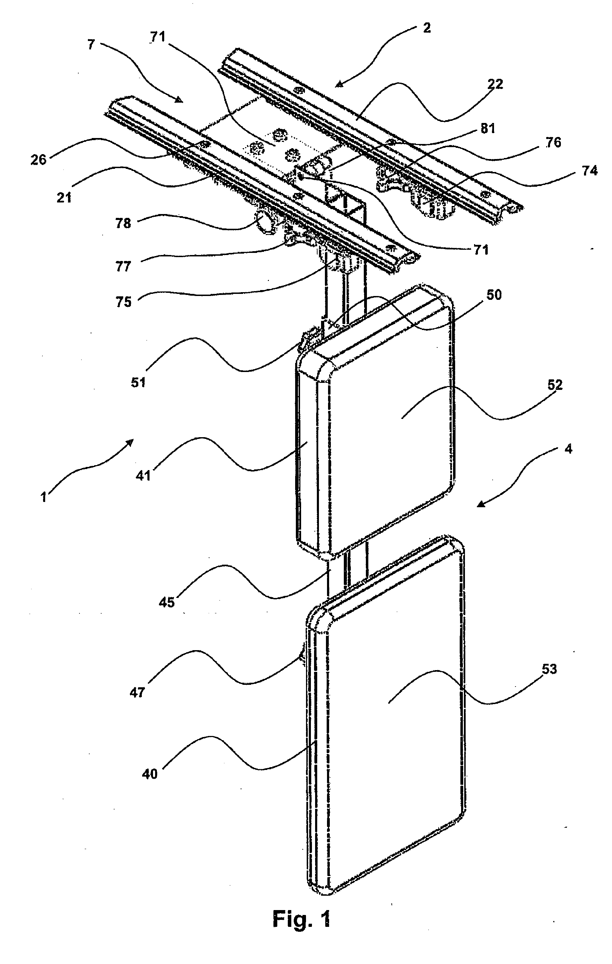

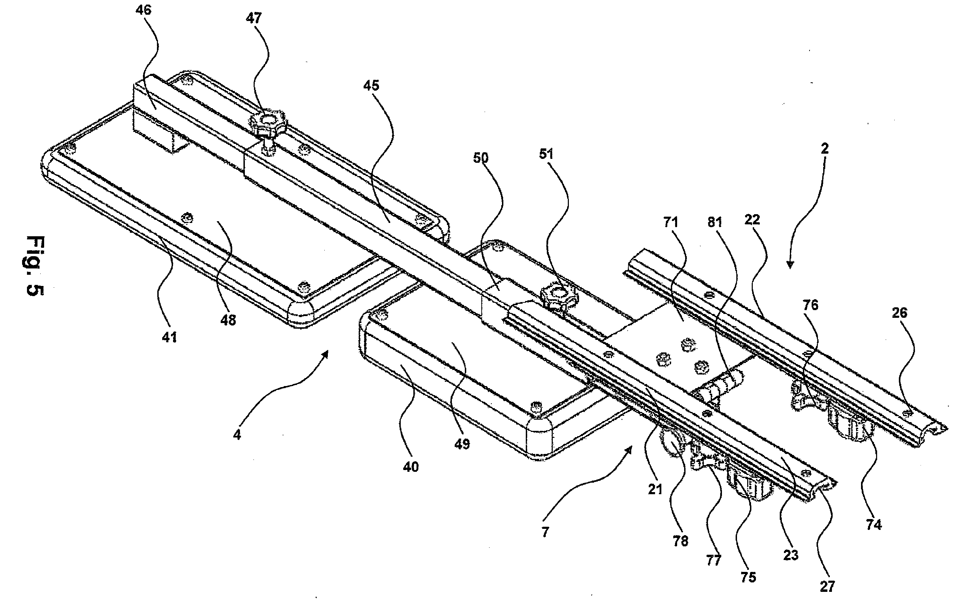

Figur 1 zeigt eine Lehnenanordnung 1 zum Einbau in ein Kraftfahrzeug 100 zur Beförderung von Rollstuhlfahrern, mit einer Befestigungseinrichtung 2 zum Befestigen der Lehnenanordnung 1 an der Decke des Kraftfahrzeugs 100, und einer an der Befestigungseinrichtung 2 angebrachten Rückenlehne 4 zum Stützen eines Rollstuhlfahrers, wobei die Rückenlehne 4 zwischen einer an der Befestigungseinrichtung 2 verstauten Stauposition (s. Figur 5) und eine im Wesentlichen ausgefahrenen Betriebsposition bewegbar ist.

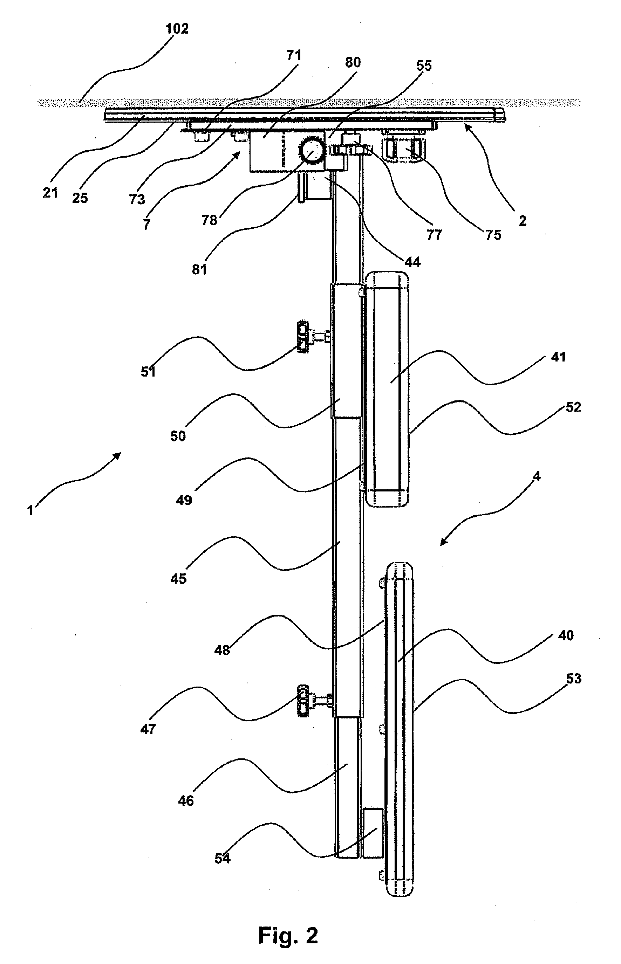

Die Befestigungseinrichtung 2 weist zwei profilierte Flachstangen 21, 22 auf, die parallel zueinander und voneinander beabstandet angeordnet sind. Denkbar wäre auch eine Ausführungsform der Befestigungseinrichturig 2, die nur eine oder mehr als zwei Flachstangen aufweist oder in Form einer Platte ausgebildet ist. Die Flachstangen 21, 22 haben ein Hutprofil. Der mittlere Flächenabschnitt auf der Außenseite bildet die Verbindungsfiäche der Flachstangen 21, 22 zur Montage an das Kraftfahrzeug 100. Jede Verbindungsfläche ist mit drei Bohrungen 26 ausgestattet. Die Bohrungen 26 sind in gleichmäßigen Abständen zueinander in Richtung der länglichen Erstreckung bzw. entlang der Längsachse der Flachstange 21, 22 und im Wesentlichen mittig zur Breite des mittleren Fiächenabschnitt angeordnet. Zum Befestigen der Flachstangen 21, 22 wird jeweils eine Schraube von der Unterseite 25 (s. Figur 2) der Flachstangen 21, 22 durch eine Bohrung 26 durchgeführt und an der Decke 102 eines Kraftfahrzeugs 100 in Eingriff gebracht. Je nach Abmessungen der Flachstangen 21, 22 und Gewicht der Lehnenanordnung sind auch mehr als drei Bohrungen 26 pro Flachstange 21, 22 denkbar.

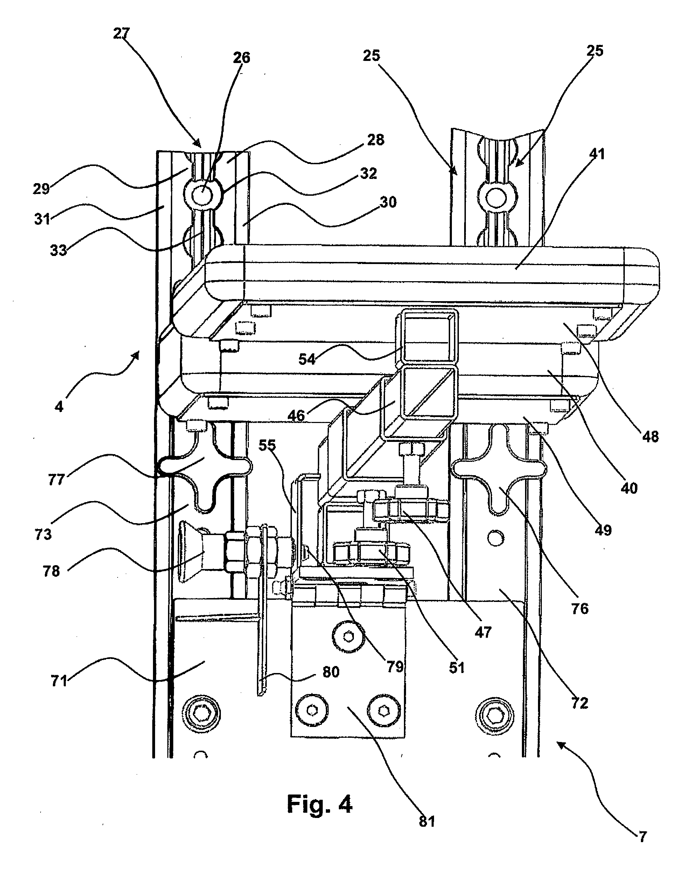

Wie in Figur 4 zu dargestellt, ist an der Unterseite 25 jeder Flachstange 21, 22 im ausgehöhlten Bereich des Hutprofils eine Schiene 27 ausgebildet. Die Schiene 27 weist zwei sich gegenüberliegende Flansche 28, 29 auf, die sich über die gesamte Länge jeder Flachstange 21, 22 erstrecken. Die Flansche 28, 29 sind jeweils an den seitlich abstehenden Flächenabschnitten 30, 31 an der Unterseite 25 angebaut und so dimensioniert, dass zwischen den Flanschen 28, 29 ein Zugang 33 zum ausgehöhlten Bereich frei bleibt. In den Flanschen 28, 29 sind in regelmäßigen Abständen teilkreisförmige Ausschnitte 32 ausgebildet. Die Ausschnitte 32 und die Flansche sind so dimensioniert und angeordnet, dass sie mit den Bohrungen 26 korrespondieren und den Einsatz der Schrauben bzw. die Befestigung der Flachstangen 21, 22 erleichtern.

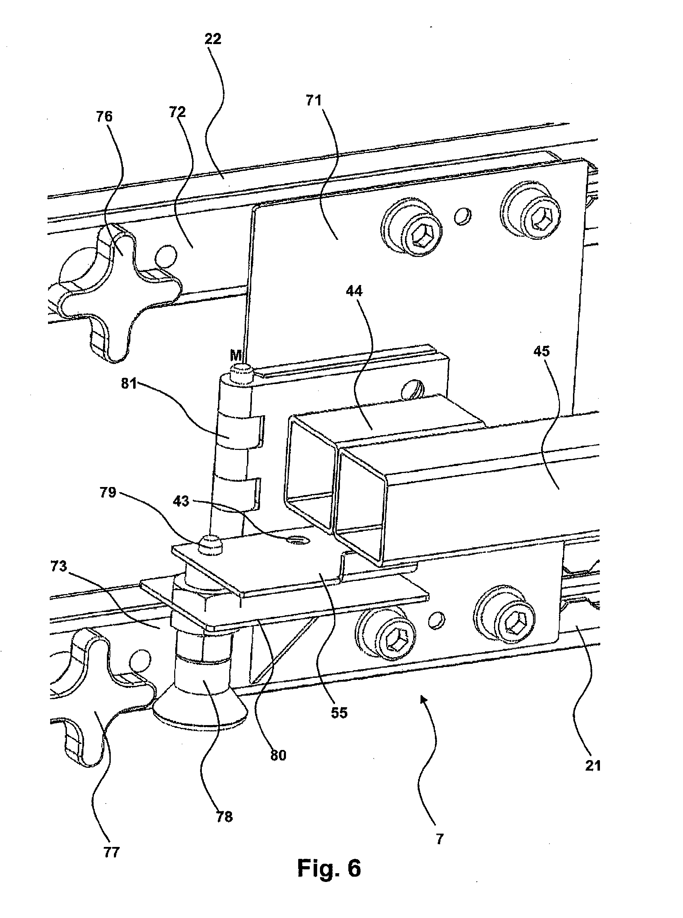

Figur 4 und 6 zeigen einen Schlitten 7 zum Verschieben der Rückenlehne 4 in horizontaler Richtung. Der Schlitten 7 ist in die Schienen 27 eingehängt. Es umfasst eine Schlittenplatte 71, zwei relativ zu den Schienen 27 bewegbare Schlittengleiter 72, 73, zwei Drehriegel 74, 75 sowie zwei Anziehschrauben 76, 77.

Die Schlittengleiter 72, 73 sind in die Schienen 27 der Flachstangen 21, 22 eingehängt. Ferner, weisen die Schlittengleiter 72, 73 ein rechteckiges Grundprofil auf, dessen Breite im Wesentlichen der Breite der Schiene 27 und dessen Länge etwa das Doppelte der Schlittenplatte 71 entspricht. Nicht in den Figuren gezeigt ist ein Trägerelement der Schlittengleiter 73, 73, der innerhalb des ausgehöhlten Bereichs der Flachstangen 21, 22 auf den Flanschen 28, 29 der Schienen 27 aufliegt. Das Trägerelement ist in dieser Ausführungsform als Flachstab ausgebildet und mittels eines Halsabschnittes, der schmaler ist als der Zugang 33, mit dem in den Figuren gezeigten Abschnitten der Schlittengleiter 72, 73 verbunden. Denkbar wären auch Trägerelemente, die in Form von Rollen oder anderen Gleiteinrichtungen ausgebildet sind.

Beabstandet von der Schlittenplatte 71 befindet sich jeweils ein Drehriegel 74, 75 und eine Anziehschraube 76, 77 an jedem Schlittengleiter 72, 73. Der Drehriegel 74, 75 ist jeweils am Ende der Schlittengleiter 72, 73 angeordnet. Die Anziehschraube 76, 77 hingegen befindet sich etwa in der Mitte der Schlittengleiter 72, 73 zwischen der Schlittenplatte 71 und dem Drehriegel 74, 75. Die Drehriegel 74, 75 wirken jeweils mit der Schiene 27 zusammen, um den Schlitten 7 an Befestigungseinrichtung 2 in verschiedenen Positionen zu arretieren. Zum manuellen Einstellen der Drehriegel 74, 75 ist ein Griff mit einer für eine durchschnittliche Hand ausreichende Greiffläche vorgesehen. Vorzugsweise ist der Griff, wie hier gezeigt, quaderförmig mit abgerundeten Kanten und einem erhöhten mittleren Bereich ergonomisch ausgebildet. Die Anziehschrauben 76, 77 drücken bzw. pressen den Schlitten 71 an die Flachstangen 21, 22 an. Auf diese Weise wird ein Klappern des Schlittens 7 verhindert. Die Anziehschrauben 76, 77 sind manuell verstellbar. Hierzu weisen sie einen kreuzförmigen Griff auf.

Die Schlittenplatte 71 ist in Form eines rechteckigen Bleches ausgebildet und mittels mehrerer Schrauben an beiden Schlittengleiter 72, 73 befestigt. In diesem Ausführungsbeispiel ist die Schlittenplatte 71 am Ende der Schlenengleiter 72, 73 angeordnet. Die Breite der Schlittenplatte 71 ist so bemessen, dass sie bündig mit den Außenkanten der Schlittengleiter 72, 73 abschließt, wie in Figur 4 dargestellt.

Ein Sicherungsglied 78 ist am Schlitten 7 bzw. in dieser Ausführungsform an der Schlittenplatte 71 angebracht. Das Sicherungsglied 78 ist mindestens in der Stauposition und in der Betriebsposition der Rückenlehne 4 in eine der Ausnehmungen 43 an einer Teleskopstange 42 der Rückenlehne 4 in Eingriff bringbar. Hierzu weist es einen Stift 79 auf, der parallel zur Drehachse M der Rückenlehne 4 bzw. senkrecht zur den Längsachsen den Flachstangen 21, 22 ausgerichtet ist. Das Sicherungsglied 78 ist an einer Halterung 80 angeschraubt, die an der Schlittenplatte 71 angeschweißt ist. Ferner ist das Sicherungsglied 78 mittels einer Feder im Inneren des Sicherungsgliedes 78 in Richtung ihrer Längsachse vorgespannt. Die Vorspannung bewirkt, dass der Stift 79 automatisch in die Ausnehmung 43 in Eingriff kommt, sobald sich die Ausnehmung koaxial zum Stift 79 ausrichtet. Auf diese Weise wird die Sicherung aktiviert. Zum Deaktivieren der Sicherung ist eine manuelle Betätigung des Sicherungsgliedes 78 entgegen der Federkraft notwendig. Hierzu weist das Sicherungsglied 78 einen konisch geformten Griff auf, der zur Flachstange 21 benachbart angeordnet ist.

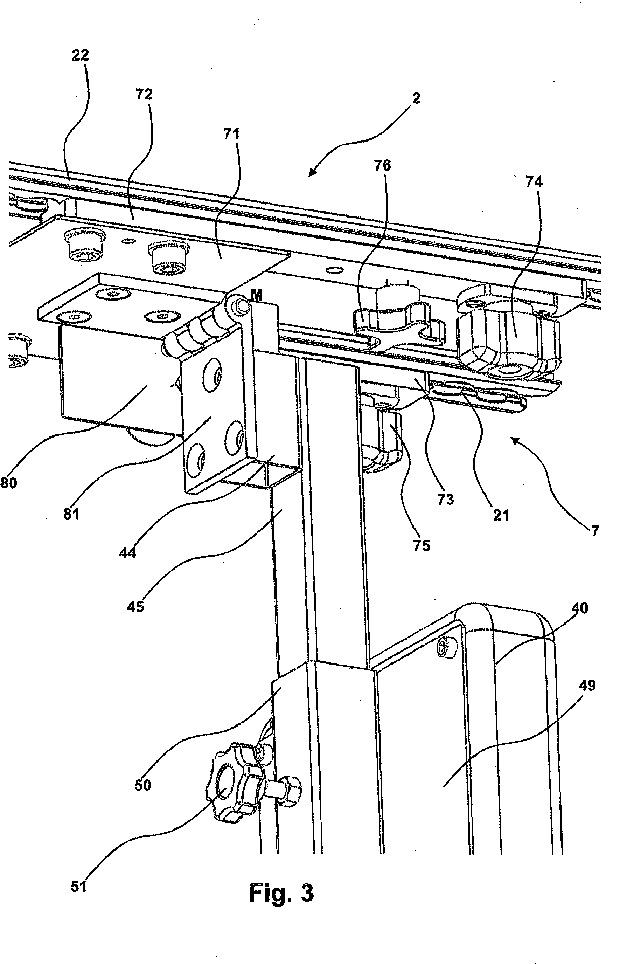

Ein Scharnier 81 ist an der Schlittenplatte 78 befestigt bzw. angeschraubt, wodurch die Rückenlehne 4 drehbar um eine horizontale Schwenkachse M an der Befestigungseinrichtung 2 gelagert ist. Die Drehachse M des Scharniers 81 liegt in einer horizontalen Ebene und ist senkrecht zu den Längsachsen der Flachstangen 21, 22 ausgerichtet. Ein alternatives Ausführungsbeispiel mit einer parallel zu den Flachstangen 21, 22 ausgerichteten Drehachse wäre auch denkbar. Das Scharnier 81 ist im Bereich von mindestens 0° bis 90° schwenkbar. Denkbar wären auch größere Schwenkbereiche. Bei einer Winkelstellung von 0° liegen beide Scharnierplatten aneinander und die Rückenlehne 4 befindet sich in der verstauten Stauposition, vgl. Figur 5 und 6. In der Betriebsposition der Rückenlehne 4 schließen die Scharnierplatten einen Winkel von 90° ein, vgl. Figur 3. Das Scharnier 81 auf der Schlittenplatte 71 ist in etwa auf Höhe der Mitte der Schienengleiter 72, 73 angeordnet. In diesem Ausführungsbeispiel ist das Scharnier 81 an einem innenliegenden Ende 84 der Schlittenplatte 71 und mittig zur Breite der Schlittenplatte 71 befestigt, so dass das Gewicht sich im Wesentlichen gleichmäßig auf die Befestigungseinrichtung 2 bzw. beide Flachstangen 21, 22 verteilt.

Die Teleskopstange 42 ist mittels eines Verbindungsstücks 44 mit dem Scharnier 81 fest gekoppelt. Das Verbindungsstück 44 ist mit der Teleskopstange 42 und dem Scharnier 81 verschweißt. Denkbar wäre auch eine Schraub- oder eine andere formschlüssige Verbindung. Das Verbindungsstück 44 stellt in der Stauposition einen Abstand zwischen der Teleskopstange 42 und der Befestigungseinrichtung 2 her. Der Abstand ist so bemessen, dass die Teleskopstange bzw. daran angebaute Teile auch in der Stauposition von der Befestigungseinrichtung 2 bzw. von Ebene, in der die Befestigungseinrichtung 2 liegt, beabstandet sind. Das Verbindungsstück 44 ist aus einem Vierkantrohr gefertigt und entspricht im Wesentlichen der Grundform der Teleskopstange 42. Die Teleskopstange 42 umfasst zwei Teilstücke 45, 46. Die Teilstücke sind ineinander schiebbar und weisen hierzu unterschiedlich große Querschnitte auf. Der Querschnitt des außen angeordneten Teilstücks 46 ist kleiner als der Querschnitt des inneren Teilstücks 45. Das äußere Teilstück 46 ist mittels einer Sicherungsschraube 47 mit dem inneren Teilstück 45 kraftschlüssig verbindbar. Denkbar wäre auch eine formschlüssige Arretierung beider Teilstücke mittels eines Sicherungsstiftes oder -schraube, die in eine dazu korrespondierende Bohrung am äußeren Teilstück 46 in Eingriff bringbar ist. Auf diese Weise sind die Teilstücke 45, 46 in einer vorbestimmten Position zueinander arretierbar.

Die Rückenlehne 4 ist an einer Teleskopstange 42 angebracht und mittels der Teleskopstange 42 und dem Schlitten 7 mit der Befestigungseinrichtung 2 verbunden bzw. gekoppelt. Die Rückenlehne 4 ist in horizontaler Bewegungsrichtung verstellbar bzw. entlang der Schienen 21, 22 verschiebbar. Nicht in den Figuren gezeigt sind Rotationsdämpfer und / oder Gasfeder mittels derer die Rückenlehne 4 gedämpft drehbar ist.

Die Rückenlehne 4 umfasst eine Rücken- 40 und Kopfstütze 41. Die Rücken- und Kopfstütze 40, 41 haben eine rechteckige Grundform und weisen an ihrer zur Teleskopstange 42 zugewendeten Seite jeweils eine Stützplatte 48, 49 auf. Die Stützplatte 48 der Rückenstütze 40 ist mittels eines zweiten Verbindungsstücks 54 mit dem äußeren Teilstück 46 der Teleskopstange 42 verbunden. Das Verbindungsstück 54 ist am freien Ende des äußeren Teilstücks 47 angebracht. Die Kopfstütze 41 ist an der Teleskopstange 42 verschiebbar befestigt. Hierzu ist die Stützplatte 49 der Kopfstütze 41 mittels einer Hülse 50 mit dem inneren Teilstück 45 der Teleskopstange 42 verbunden, wobei die Hülse 50 das innere Teilstück 45 der Teleskopstange 42 abschnittsweise umfasst. Die Hülse 50 ist als Vierkantprofil ausgebildet. Die Kopfstütze 41 ist mittels kraftschlüssiger Verbindung an der Teleskopstange 42 befestigbar. Hierzu weist sie einen Sicherungsschraube 51 auf, welche die Hülse 50 und an die Teleskopstange 42 andrückt.

Die Breite der Rücken- und Kopfstütze 40, 41 sind im Wesentlichen identisch. Die Höhe der Rückenstütze 40 ist etwa um ein Drittel höher als die der Kopfstütze 41. Die Rückenstütze 40 ist dünner als die Kopfstütze. Das Gewicht der Rückenstütze 41 ist trotz ihrer größeren Abmessungen dadurch nicht wesentlich höher als die Kopfstütze 41. Dies ist insbesondere beim Bewegen der Rückenlehne 4 aus der Betriebsposition in die Stauposition vorteilhaft. Die Rücken- und Kopfstütze 40, 41 sind so zueinander ausgerichtet, dass die Stützflächen 52, 53 zueinander fluchten, wie in Figur 2 dargestellt. Dabei gleicht das Verbindungsstück 50 die unterschiedlichen Dicken der Rücken- und Kopfstütze 40, 41 aus. Denkbar wäre auch eine Anordnung, bei der die Rückenstütze 40 zur Kopfstütze 41 versetzt angeordnet ist, bevorzugter Weise so, dass die Rückenstütze 40 der Kopfstütze 41 vorgesetzt ist. Ferner ist es auch denkbar die Teleskopstange 42 mit Rücken- und Kopfstützen aus bekannten Automobilsitzen zu bestücken.

Figur 2, 7 und 8 zeigen ferner ein Ausführungsbeispiel eines Kraftfahrzeugs 100 mit dem oben beschriebenen Ausführungsbeispiel der Lehnenanordnung 1 in einem an der Decke 102 des Kraftfahrzeugs 100 eingebauten Zustand.

Innerhalb des Kraftfahrzeugs 100 ist mindestens eine Lehnenanordnung 1 nach dem Ausführungsbeispiel eingebaut. Die Lehnenanordnung 1 ist mittels der Befestigungseinrichtung 2 an der Decke 102 des Kraftfahrzeugs 100 befestigt. Vorzugsweise ist die Befestigungseinrichtung 2 formschlüssig mit der Decke 102 verbunden oder verschraubt. Die Decke 102 ist in den Figuren schematisch als geradlinige Linie bzw. Fläche dargestellt. Die Lehnenanordnung 1 ist jedoch an unterschiedliche Deckenformen anbau- und anpassbar. Vorzugsweise ist die Lehnenanordnung 1 an Trägerstrukturen des Kraftfahrzeugs 100 befestigbar.

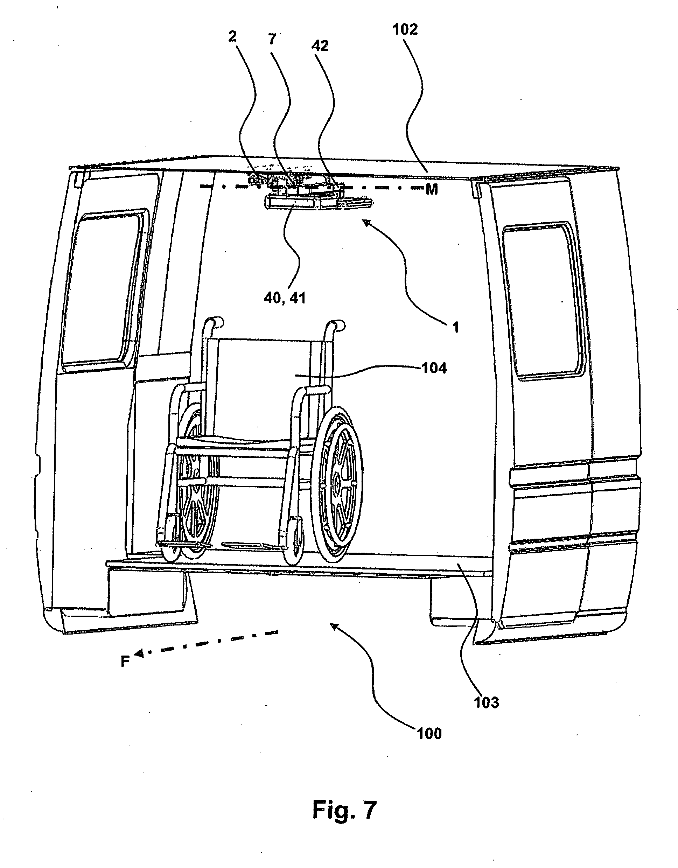

In Figur 7 befindet sich die Lehnenanordnung 1 in der Stauposition. Idealerweise ist die Rückenlehne 4 so zur Decke 102 ausgerichtet, dass die Rückenlehne 4 so wenig wie möglich von der Decke 102 absteht. Hierzu liegt die Rückenlehne 4 in der Stauposition im Wesentlichen an der Decke des Kraftfahrzeugs 100 an. Ferner ist die Rückenlehne 4 in der Stauposition im Wesentlichen horizontal ausgerichtet und parallel zur Decke 102 des Kraftfahrzeugs 100 ausgerichtet. Außerdem ist die Rückenlehne 4 benachbart zur Decke 102 angeordnet. Die Rückenlehne 4 ist in der Stauposition von dem Rollstuhlfahrer so weit beabstandet, so dass der Rollstuhlfahrer in seinem Bewegungsraum nicht eingeschränkt wird. In der Stauposition ist die Rückenlehne 4 an der Decke 102 des Kraftfahrzeugs 100 befestigt. Die Befestigung wird mittels des Sicherungsgliedes 78 erreicht. Die Länge der Rückenlehne 4 ist mittels der Teleskopstange 42 einstellbar. In der Stauposition ist die Länge der Rückenlehne 4 verkürzbar und dadurch platzsparend verstaubar. Hierzu wird das äußere Teilstück 46 in das innere Teilstück 45 der Teleskopstange 42 geschoben, wenn die Sicherungsschraube 47 sich in der gelösten Stellung befindet.

Die Rückenlehne 4 ist drehbar um eine horizontale Schwenkachse M an der Befestigungseinrichtung 2 gelagert, wobei die horizontale Schwenkachse M quer zur Fahrtrichtung F ausgerichtet ist. Die Schienen 27 sind quer zur Fahrtrichtung F angeordnet, könnten aber auch parallel zur Fahrtrichtung F ausgerichtet sein. Denkbar wären auch mehrere Schienen 27, so dass die Rückenlehne sowohl parallel als auch quer zur Fahrtrichtung F verstellbar ist. Die Rückenlehne 4 ist in Fahrtrichtung F aus der Stauposition in die Betriebsposition schwenkbar ist. Denkbar wäre auch eine Schwenkrichtung der Rückenlehne 4 entgegen der Fahrtrichtung F.

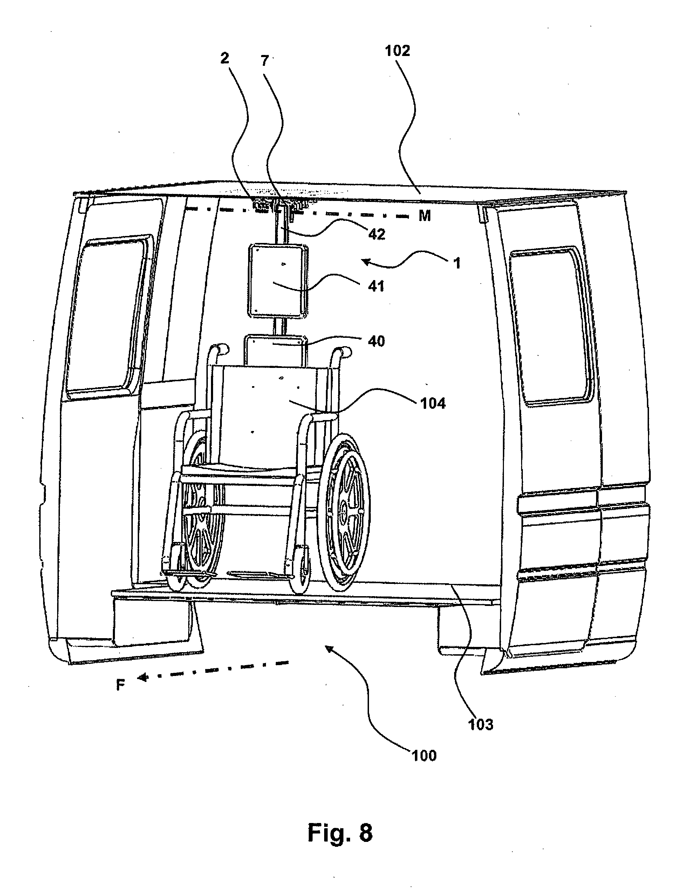

Figur 8 zeigt die Rückenlehne 4 in der Betriebsposition. Wie in Figur 2 dargestellt, nimmt die Rückenlehne 4 in der Betriebsposition eine im Wesentlichen vertikale Position ein. Die Rückenlehne 4 ist innerhalb des Kraftfahrzeugs 100 in horizontaler Richtung verstellbar, so dass die Rückenlehne 4 an die Sitzposition des Rollstuhlfahrers anpassbar ist. Die Rückenstütze 40 befindet sich an der Außenseite der Rückenlehne des Rollstuhls 104. Ferner ist die Rückenlehne 4 so ausgerichtet, dass die Rückenstütze 40 im Wesentlichen mittig zur Außenseite der Rückenlehne des Rollstuhls 104 ausgerichtet ist. Die Höhe der Rückenstütze 40 ist mittels der Teleskopstange 42 variierbar. Ebenso ist die Höhe der Kopfstütze 41 an die Kopfposition des Rollstuhlfahrers anpassbar. Zum Sichern der Rückenlehne und zur Verteilung der Stützkraft ist die Rückenlehne 4 in der Betriebsposition am Boden des Kraftfahrzeugs 100 befestigbar.

Nicht in den Figuren gezeigt ist ein Sicherheitsgurt, der teilweise an der Rückenlehne 4 befestigbar ist. An der Rückenlehne 4 ist ein Gurtschloss angebracht, an dem ein Zwei- oder Dreipunktgurt befestigbar ist. Der Gurt ist an der Rückenlehne 4 oder am Kraftfahrzeug 100 angebracht und wird zum Sichern des Rollstuhlfahrers mit einem Gurtschloss an der Rückenlehne 4 gesichert.

## Patentansprüche

1. Lehnenanordnung (1) zum Einbau in ein Kraftfahrzeug (100) zur Beförderung von Rollstuhlfahrern, mit
einer Befestigungseinrichtung (2) zum Befestigen der Lehnenanordnung (1) an der Decke des Kraftfahrzeugs (100), und
einer an der Befestigungseinrichtung (2) angebrachten Rückenlehne (4) zum Stützen eines Rollstuhlfahrers, wobei die Rückenlehne (4) zwischen einer an der Befestigungseinrichtung (2) verstauten Stauposition und einer im Wesentlichen ausgefahrenen Betriebsposition bewegbar ist,
**dadurch gekennzeichnet, dass** die Befestigungseinrichtung (2) mindestens eine Schiene (27) aufweist, wobei die Rückenlehne (4) entlang der Schiene (27) verschiebbar ist.

2. Lehnenanordnung (1) nach Anspruch 1,
**dadurch gekennzeichnet, dass** die Rückenlehne (4) drehbar um eine horizontale Schwenkachse (M) an der Befestigungseinrichtung (2) gelagert ist.

3. Lehnenanordnung (1) nach einem der vorstehenden Ansprüche,
**dadurch gekennzeichnet, dass** die Rückenlehne (4) in der Stauposition im Wesentlichen horizontal ausgerichtet ist.

4. Lehnenanordnung (1) nach einem der vorstehenden Ansprüche,
**dadurch gekennzeichnet, dass** die Rückenlehne (4) in horizontaler Bewegungsrichtung verstellbar ist.

5. Lehnenanordnung (1) nach einem der vorstehenden Ansprüche,
**dadurch gekennzeichnet, dass** die Befestigungseinrichtung (2) zwei zueinander beabstandete und parallel angeordnete Schienen (27) aufweist.

6. Lehnenanordnung (1) nach einem der vorstehenden Ansprüche,
**gekennzeichnet durch** einen Schlitten (7), der zum Verschieben der Rückenlehne (4) in die Schienen (27) eingehängt ist.

7. Lehnenanordnung (1) nach einem der vorstehenden Ansprüche,
**dadurch gekennzeichnet, dass** die Rückenlehne (4) an einer Teleskopstange (42) angebracht ist und die Teleskopstange (42) mit der Befestigungseinrichtung (2) verbunden ist.

8. Lehnenanordnung (1) nach Anspruch 7,
**dadurch gekennzeichnet, dass** der Schlitten (7) mindestens einen Drehriegel (74, 75) aufweist, der mit einer Schiene (27) zusammenwirkt, um den Schlitten (7) an der Schiene (27) in verschiedenen Positionen zu arretieren.

9. Lehnenanordnung (1) nach Anspruch 7 oder 8,
**dadurch gekennzeichnet, dass** ein am Schlitten (7) angebrachtes Sicherungsglied (78) mindestens in der Stauposition und in der Betriebsposition der Rückenlehne (4) in eine Ausnehmung (43) an der Teleskopstange (42) in Eingriff bringbar ist.

10. Lehnenanordnung (1) nach einem der vorstehenden Ansprüche,
**dadurch gekennzeichnet, dass** die Rückenlehne (4) mittels eines Rotationsdämpfers oder einer Gasfeder gedämpft drehbar ist.

11. Lehnenanordnung (1) nach einem der Ansprüche 3 bis 10,
**dadurch gekennzeichnet, dass** die Lehnenanordnung (1) eine Kopfstütze (41) aufweist, die an der Teleskopstange (42) verschiebbar befestigt ist.

12. Kraftfahrzeug (100) zur Beförderung von Rollstuhlfahrer mit
mindestens einer Lehnenanordnung (1) mit einer Befestigungseinrichtung (2) zum Befestigen der Lehnenanordnung (1) an der Decke des Kraftfahrzeugs (100), und einer an der Befestigungseinrichtung (2) angebrachten Rückenlehne (4) zum Stützen eines Rollstuhlfahrers, wobei die Rückenlehne (4) zwischen einer an der Befestigungseinrichtung (2) verstauten Stauposition und einer im Wesentlichen ausgefahrenen Betriebsposition bewegbar ist,
wobei die Lehnenanordnung (1) mittels der Befestigungseinrichtung (2) an der Decke des Kraftfahrzeugs (100) befestigt ist
**dadurch gekennzeichnet, dass** die Befestigungseinrichtung (2) mindestens eine Schiene (27) aufweist, wobei die Rückenlehne (4) entlang der Schiene (27) verschiebbar ist.

13. Kraftfahrzeug (100) nach Anspruch 12 mit
einer Lehnenanordnung (1) nach mindestens einem der Ansprüche 2 bis 11.

14. Kraftfahrzeug (100) nach einem der Ansprüche 12 oder 13,
**dadurch gekennzeichnet, dass** die Rückenlehne (4) drehbar um eine horizontale Schwenkachse (M) an der Befestigungseinrichtung (2) gelagert ist, wobei die horizontale Schwenkachse (M) quer oder parallel zur Fahrtrichtung (F) ausgerichtet ist.

15. Kraftfahrzeug (100) nach einem der Ansprüche 12 bis 14,
**dadurch gekennzeichnet, dass** die Rückenlehne (4) in der Stauposition im Wesentlichen an der Decke (102) des Kraftfahrzeugs (100) anliegt oder unmittelbar benachbart zu dieser angeordnet ist und /oder
dass die Rückenlehne (4) in Fahrtrichtung (F) aus der Stauposition in die Betriebsposition schwenkbar ist.

16. Kraftfahrzeug (100) nach einem der Ansprüche 12 bis 15,
**dadurch gekennzeichnet, dass** die Rückenlehne (4) in der Stauposition an der Decke (F) des Fahrzeugs (100) und / oder in der Betriebsposition zusätzlich am Boden des Fahrzeugs befestigbar ist.

## Claims

1. Rest arrangement (1) for installation in a motor vehicle (100) for conveying wheelchair users, having
a fastening device (2) for fastening the rest arrangement (1) to the ceiling of the motor vehicle (100), and
a backrest (4) attached to the fastening device (2) for supporting a wheelchair user, the backrest (4) being movable between a stowed position stowed on the fastening device (2) and a substantially extended operating position,
**characterised in that** the fastening device (2) has at least one rail (27), the backrest (4) being displaceable along the rail (27).

2. Rest arrangement (1) according to Claim 1,
**characterised in that** the backrest (4) is mounted on the fastening device (2) rotatably about a horizontal pivot axis (M).

3. Rest arrangement (1) according to one of the preceding claims,
**characterised in that** the backrest (4) is oriented substantially horizontally in the stowed position.

4. Rest arrangement (1) according to one of the preceding claims,
**characterised in that** the backrest (4) is adjustable in the horizontal movement direction.

5. Rest arrangement (1) according to one of the preceding claims,
**characterised in that** the fastening device (2) has two rails (27) spaced apart from and arranged parallel to one another.

6. Rest arrangement (1) according to one of the preceding claims,
**characterised by** a carriage (7) which is hung onto the rails (27) for displacement of the backrest (4).

7. Rest arrangement (1) according to one of the preceding claims,
**characterised in that** the backrest (4) is attached to a telescopic rod (42) and the telescopic rod (42) is connected to the fastening device (2).

8. Rest arrangement (1) according to Claim 7,
**characterised in that** the carriage (7) has at least one rotary lock (74, 75) which cooperates with a rail (27) in order to lock the carriage (7) on the rail (27) in different positions.

9. Rest arrangement (1) according to Claim 7 or 8,
**characterised in that** a securing member (78) attached to the carriage (7) is engageable in an opening (43) on the telescopic rod (42), at least in the stowed position and in the operating position of the backrest (4).

10. Rest arrangement (1) according to one of the preceding claims,
**characterised in that** the backrest (4) is rotatable in a damped manner by means of a rotational damper or a gas spring.

11. Rest arrangement (1) according to one of Claims 3 to 10,
**characterised in that** the rest arrangement (1) has a head support (41) which is displaceably fastened to the telescopic rod (42).

12. Motor vehicle (100) for conveying wheelchair users having
at least one rest arrangement (1) having a fastening device (2) for fastening the rest arrangement (1) to the ceiling of the motor vehicle (100), and a backrest (4) attached to the fastening device (2) for supporting a wheelchair user, the backrest (4) being movable between a stowed position stowed on the fastening device (2) and a substantially extended operating position,
the rest arrangement (1) being fastened to the ceiling of the motor vehicle (100) by means of the fastening device (2)
**characterised in that** the fastening device (2) has at least one rail (27), the backrest (4) being displaceable along the rail (27).

13. Motor vehicle (100) according to Claim 12 having
a rest arrangement (1) according to at least one of Claims 2 to 11.

14. Motor vehicle (100) according to one of Claims 12 or 13,
**characterised in that** the backrest (4) is mounted on the fastening device (2) rotatably about a horizontal pivot axis (M), the horizontal pivot axis (M) being oriented transversely or parallel to the direction of travel (F).

15. Motor vehicle (100) according to one of Claims 12 to 14, **characterised in that** the backrest (4) in the stowed position bears substantially against the ceiling (102) of the motor vehicle (100) or is arranged directly adjacent to the ceiling and/or
**in that** the backrest (4) is pivotable in the direction of travel (F) from the stowed position into the operating position.

16. Motor vehicle (100) according to one of Claims 12 to 15,
**characterised in that** the backrest (4) in the stowed position can be fastened to the ceiling (F) of the vehicle (100) and/or in the operating position can be additionally fastened to the floor of the vehicle.

## Revendications

1. Système de dossier (1) destiné à être intégré dans un véhicule automobile (100) pour le transport de personnes en fauteuil roulant, comprenant
un dispositif de fixation (2) pour fixer le système de dossier (1) au plafond du véhicule automobile (100), et
un dossier (4) fixé au dispositif de fixation (2), pour soutenir une personne en fauteuil roulant, le dossier (4) étant mobile entre une position de rangement, dans laquelle le dossier est rangé au niveau du dispositif de fixation (2), et une position de fonctionnement, dans laquelle le dossier est essentiellement déployé,
**caractérisé en ce que** le dispositif de fixation (2) présente au moins un rail (27), le dossier (4) pouvant être déplacé par coulissement le long du rail (27).

2. Système de dossier (1) selon la revendication 1,
**caractérisé en ce que** le dossier (4) est logé au niveau du dispositif de fixation (2) de manière à pouvoir tourner autour d'un axe de pivotement (M) horizontal.

3. Système de dossier (1) selon l'une quelconque des revendications précédentes,
**caractérisé en ce que** le dossier (4) est orienté de manière essentiellement horizontale dans la position de rangement.

4. Système de dossier (1) selon l'une quelconque des revendications précédentes,
**caractérisé en ce que** le dossier (4) peut être déplacé dans une direction de déplacement horizontale.

5. Système de dossier (1) selon l'une quelconque des revendications précédentes,
**caractérisé en ce que** le dispositif de fixation (2) présente deux rails (27) espacés l'un de l'autre et disposés de manière parallèle l'un par rapport à l'autre.

6. Système de dossier (1) selon l'une quelconque des revendications précédentes,
**caractérisé par** un chariot (7), qui est accroché dans les rails (27) aux fins du déplacement par coulissement du dossier (4).

7. Système de dossier (1) selon l'une quelconque des revendications précédentes,
**caractérisé en ce que** le dossier (4) est fixé à une tige télescopique (42), et **en ce que** la tige télescopique (42) est reliée au dispositif de fixation (2).

8. Système de dossier (1) selon la revendication 7,
**caractérisé en ce que** le chariot (7) présente au moins un verrou rotatif (74, 75), qui coopère avec un rail (27) pour bloquer le chariot (7) au niveau du rail (27) dans diverses positions.

9. Système de dossier (1) selon la revendication 7 ou 8,
**caractérisé en ce qu'**un organe de sécurité (78) fixé au chariot (7) peut être amené en prise avec un évidement (43) sur la tige télescopique (42) au moins dans la position de rangement et dans la position de fonctionnement du dossier (4).

10. Système de dossier (1) selon l'une quelconque des revendications précédentes,
**caractérisé en ce que** le dossier (4) peut être tourné de manière amortie au moyen d'un amortisseur de rotation ou d'un ressort à gaz.

11. Système de dossier (1) selon l'une quelconque des revendications 3 à 10,
**caractérisé en ce que** le système de dossier (1) présente un appuie-tête (41), qui est fixé de manière à pouvoir être déplacé par coulissement le long de la tige télescopique (42).

12. Véhicule automobile (100) pour le transport de personnes en fauteuil roulant, comprenant
au moins un système de dossier (1) doté d'un dispositif de fixation (2) pour fixer le système de dossier (1) au niveau du plafond du véhicule automobile (100), et un dossier (4) fixé au dispositif de fixation (2) pour soutenir une personne en fauteuil roulant, le dossier (4) étant mobile entre une position de rangement, dans laquelle le dossier est rangé au niveau du dispositif de fixation (2) et une position de fonctionnement, dans laquelle le dossier est essentiellement déployé,
dans lequel le système de dossier (1) est fixé au plafond du véhicule automobile (100) au moyen du dispositif de fixation (2),
**caractérisé en ce que** le dispositif de fixation (2) présente au moins un rail (27), le dossier (4) pouvant être déplacé par coulissement le long du rail (27).

13. Véhicule automobile (100) selon la revendication 12, comprenant
un système de dossier (1) selon au moins l'une quelconque des revendications 2 à 11.

14. Véhicule automobile (100) selon l'une quelconque des revendications 12 ou 13,
**caractérisé en ce que** le dossier (4) est logé au niveau du dispositif de fixation (2) de manière à pouvoir tourner autour d'un axe de pivotement (M) horizontal, l'axe de pivotement (M) horizontal étant orienté de manière transversale ou parallèle au sens de la marche (F).

15. Véhicule automobile (100) selon l'une quelconque des revendications 12 à 14,
**caractérisé en ce que** le dossier (4) repose, dans la position de rangement, essentiellement au niveau du plafond (102) du véhicule automobile (100) ou est disposé directement de manière adjacente audit plafond, et/ou
**en ce que** le dossier (4) peut pivoter, dans le sens de la marche (F), de la position de rangement dans la position de fonctionnement.

16. Véhicule automobile (100) selon l'une quelconque des revendications 12 à 15,
**caractérisé en ce que** le dossier (4) peut être fixé dans la position de rangement au plafond (F) du véhicule (100), et/ou dans la position de fonctionnement en plus au plancher du véhicule.
